(19) Europäisches Patentamt
European Patent Office
Office européen des brevets

(11) EP 2 623 361 A1

(12) **EUROPEAN PATENT APPLICATION**
published in accordance with Art. 153(4) EPC

(43) Date of publication:
**07.08.2013 Bulletin 2013/32**

(51) Int Cl.:
*B60L 7/24* (2006.01)    *B60T 8/17* (2006.01)

(21) Application number: **11828655.8**

(22) Date of filing: **22.08.2011**

(86) International application number:
**PCT/JP2011/068870**

(87) International publication number:
**WO 2012/043094 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2010 JP 2010218063**

(71) Applicant: **Hitachi, Ltd.**
**Chiyoda-ku**
**Tokyo 100-8280 (JP)**

(72) Inventors:
• **ODA, Atsushi**
**Hitachi-shi**
**Ibaraki 319-1292 (JP)**
• **YAMASHITA, Kenichi**
**Hitachinaka-shi**
**Ibaraki 312-8506 (JP)**
• **SATO, Yutaka**
**Hitachinaka-shi**
**Ibaraki 312-8506 (JP)**
• **OGAWA, Takashi**
**Hitachi-shi**
**Ibaraki 319-1292 (JP)**

(74) Representative: **Gill, Stephen Charles et al**
**Mewburn Ellis LLP**
**33 Gutter Lane**
**London**
**EC2V 8AS (GB)**

(54) **BRAKE CONTROL APPARATUS FOR VEHICLE, AND BRAKE CONTROL APPARATUS FOR MULTI-CAR TRAIN**

(57)    Conventionally, in cooperative control of a regenerative brake and air brake, a response delay of the air brake is compensated for by adding a predetermined amount of correction to an actual regenerative brake force, but it is not possible to deal with the response delay which varies each time depending on car conditions as well as on external conditions such as temperature. Consequently, the sum total of the regenerative brake force and air brake force do not match the required brake force.

A brake control device of a car is provided with means for estimating an output-ready regenerative brake force, a command value of an air brake force is determined based on the estimated regenerative brake force and the required brake force, and a command value of the regenerative brake force is determined based on the required brake force and the air brake force acting actually. This allows the sum total of brake forces to match the required brake force, eliminating the need to adjust the amount of correction on the actual car.

FIG. 1

## Description

Technical Field

The present invention relates to a brake control device of a car or a train set.

Background Art

Generally, brakes for electric rolling stock include a regenerative brake and air brake, where the regenerative brake uses a driving motor as a generator and uses generated electric power for powering of other electric rolling stock via a trolley while the air brake operates a cylinder using pressure of compressed air and uses frictional force generated by pressing a brake shoe against a brake disc or wheel tread. From the viewpoint of energy saving, an effective way is to cause the regenerative brake out of the two brakes to shoulder a maximum possible share of required brake force, which is brake force required for deceleration of the electric rolling stock.

However, the brake force provided by the regenerative brake has the properties of being reduced in a high-speed area, varying with a trolley voltage, and taking time to work, and thus there are cases in which actual regenerative brake force, which is regenerative brake force acting actually, does not match required brake force. This gives rise to a need to compensate for a difference between the required brake force and actual regenerative brake force with the air brake according to behavior of the actual regenerative brake force.

However, since the air brake is slow in responding to a command, the behavior of actual air brake force cannot keep up with the behavior of the actual regenerative brake force, consequently presenting a problem in that actual brake force, which is the sum total of the actual regenerative brake force and actual air brake force, does not match the required brake force. When riding comfort and driver's driving stability are considered, it is very important to make the actual brake force match the required brake force.

Thus, for example, Japanese Patent Publication No. 7-99883 describes a method which makes corrections to the value of the actual regenerative brake force, thereby corrects a command value for the air brake, and thereby speeds up response of the air brake.

When the actual regenerative brake force increases, the conventional technique greatly decreases the command value for the air brake by adding a one-shot pulse to the actual regenerative brake force and thereby improves response in the direction of decreasing the actual air brake force. When the actual regenerative brake force decreases, the conventional technique greatly increases the command value for the air brake in a virtual manner by adding a step-down pulse to the actual regenerative brake force and thereby improves response in the direction of increasing the actual air brake force.

In this way, an attempt is made to make the actual brake force match the required brake force by speeding up the response of the air brake.

Citation List

Patent Literature

  Patent Literature 1: Japanese Patent Publication No. 7-99883

Summary of Invention

Technical Problem

However, an optimal amount of correction such as the one-shot pulse or step-down pulse added to the actual regenerative brake force needs to be found by trial and error in an active duty car test, requiring time and energy for settings. Furthermore, there is a large delay in responding to the command value for the air brake and the response delay varies each time depending on car conditions as well as on external conditions such as temperature, making it difficult to set the appropriate amount of correction at a fixed value. Consequently, the conventional technique cannot make the actual brake force exactly match the required brake force.

The present invention has been made in view of the above problem and has an object to make the actual brake force match the required brake force.

Solution to Problem

A brake control device of a car according to the present invention comprises: a motor control device adapted to produce a brake force according to a command value for a regenerative brake; an air brake control device adapted to produce a brake force according to a command value for an air brake; required brake force computation means for determining a required brake force command value according to a condition of a car; regenerative brake force estimation means for estimating a brake force producible by the regenerative brake; and actual air brake force calculation means for calculating actual air brake force producible by the air brake, wherein the second brake force command value is determined based on the required brake force command value as well as on an estimated brake force value determined by the brake force estimation means, and a first brake force command value is determined based on the required brake force command value as well as on an actual brake force produced by the second braking means.

That is, the difference found by subtracting a predicted regenerative brake force, which is an estimated value of brake force able to be shouldered by the regenerative brake, from the required brake force is output as the command value for the air brake and the difference between the actual air brake force and required brake force is output as the command value for the regenerative brake. Instead of facilitating the response of the air brake by correcting the command value for the air brake, an air brake force is generated first and then the difference between the actual air brake force and required brake force is compensated for by the regenerative brake which has a quick brake response.

Advantageous Effect of Invention

The present invention makes actual brake force match required brake force and thereby improves riding comfort and driver's driving stability.

Brief Description of Drawings

[FIG. 1] FIG. 1 is a circuit block diagram according to an embodiment of the present invention.
[FIG. 2] FIG. 2 is a circuit block diagram of regenerative brake force estimation means according to the embodiment of the present invention.
[FIG. 3] FIG. 3 is a circuit block diagram of regenerative brake force computation means according to the embodiment of the present invention.
[FIG. 4] FIG. 4 is a command and output waveform diagram of various parts according to the embodiment of the present invention.
[FIG. 5] FIG. 5 is a circuit block diagram according to a second embodiment of the present invention.

Description of Embodiments

Embodiments of the present invention will be described below with reference to the drawings.

[First embodiment]

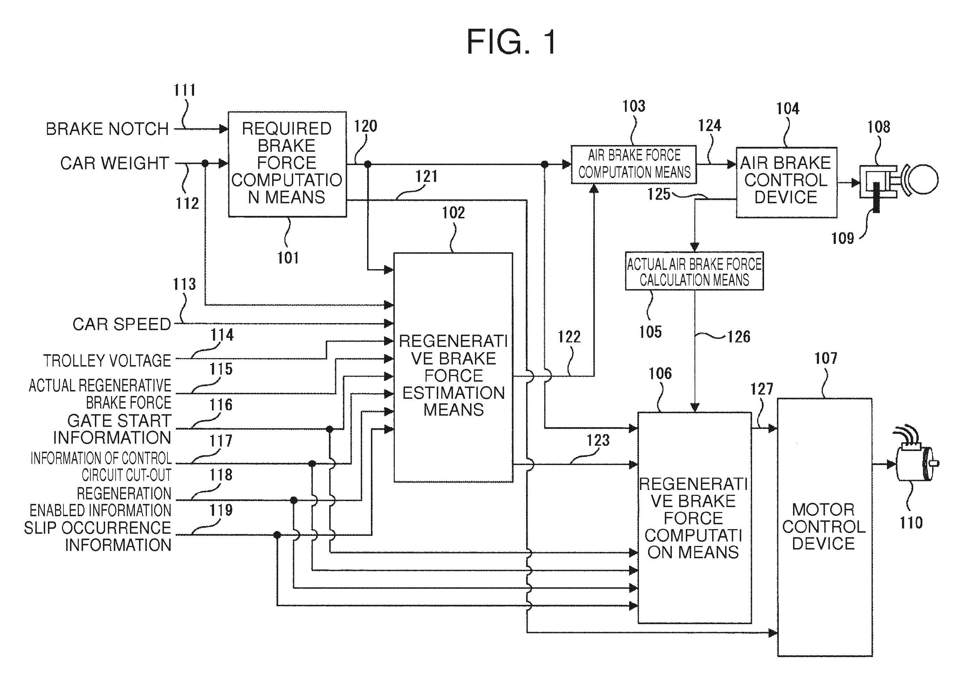

FIG. 1 is a block diagram showing a first embodiment of the present invention, and an exemplary configuration of a brake control system according to the present invention will be described below with reference to FIG. 1.

To decelerate a car, a driver operates a brake lever installed on a cab. When the brake lever is operated, a brake notch (111), which provides brake lever position information, is input to required brake force computation means (101) and required brake force (120) is calculated by the required brake force computation means (101) based on predetermined deceleration information assigned to each brake notch (111) and on car weight (112). The brake notch does not necessarily has to be a brake notch command inputted from the cab, and may be a command inputted from a device such as an automatic train operation device, automatic train control device, or automatic train stop device adapted to decelerate a railroad train.

The car weight (112) is calculated using a weight sensor mounted on the car, such as a pressure sensor installed in an air spring adapted to control car height using air pressure.

Also, upon input of the brake notch (111), the required brake force computation means (101) outputs a braking start request (121) and thereby informs a motor control device (107) that a brake operation has been performed.

Regenerative brake force estimation means (102) estimates a predicted regenerative brake force (122), which is a brake force producible by a motor (110), based on the required brake force (120) from the required brake force computation means (101), the car weight (112), car speed (113) calculated from a velocity sensor such as a pulse generator mounted on an end of a motor rotating shaft or end of an axle, gate start information (116) which indicates that a control circuit has been formed from the motor control device (107) adapted to control a motor (110), information of control circuit cut-out (117) which indicates a failed state of the motor (110) and motor control device (107), trolley voltage (114) which indicates condition of the trolley, regeneration enabled information (118) which indicates a regenerating state or non-regenerating state, and slip occurrence information (119) which indicates that the motor control device (107) is performing slip control as a result of a slip. Incidentally, motor rpm estimated from output current of the motor control device (107) may be used as the car speed (113).

The regenerative brake force estimation means (102) outputs an emergency regenerative brake force command value (123) as a command value of the regenerative brake force to regenerative brake force computation means (106) when a slip occurs such as when the axle is locked.

Air brake force computation means (103) calculates an air brake force command value (124) to be output to an air brake control device (104) by subtracting the predicted regenerative brake force (122) calculated by the regenerative brake force estimation means (102) from the required brake force (120) calculated by the required brake force computation means (101).

Based on the air brake force command value (124) from the air brake force computation means (103), the air brake control device (104) charge with compressed air into a cylinder (108) and generates an air brake force by operating a brake shoe.

Actual air brake force calculation means (105) calculates an actual air brake force (126), which is an air brake force used actually, based on actual cylinder air pressure (125) from a pressure sensor (109) in the cylinder (108), a friction coefficient of the brake shoe, and the like.

The regenerative brake force computation means (106) calculates a regenerative brake force command value (127) based on the actual air brake force (126) from the actual air brake force calculation means (105), the required brake force (120) from the required brake force computation means (101), the gate start information (116), the information of control circuit cut-out (117), the regeneration enabled information (118), and the slip occurrence information (119), and outputs the regenerative brake force command value (127) to the motor control device (107).

The motor control device (107) prepares to pass a current when the braking start request (121) is received from the required brake force computation means (101), and outputs the gate start information (116) when the preparation is completed. After getting ready to pass a current, the motor control device (107) controls the motor (110) according to the regenerative brake force command value (127) from the regenerative brake force computation means (106).

Incidentally, other than the braking start request (121), a brake notch received directly from a brake lever, protective device, or automatic train operation device via a transmission line may be adopted as a signal which gives the motor control device (107) a cue to start preparing to pass a current.

Specifically, the motor control device (107) here is an inverter device which outputs a variable voltage, variable frequency alternating current to drive a motor and which makes the motor to operate as a generator during regenerative operation.

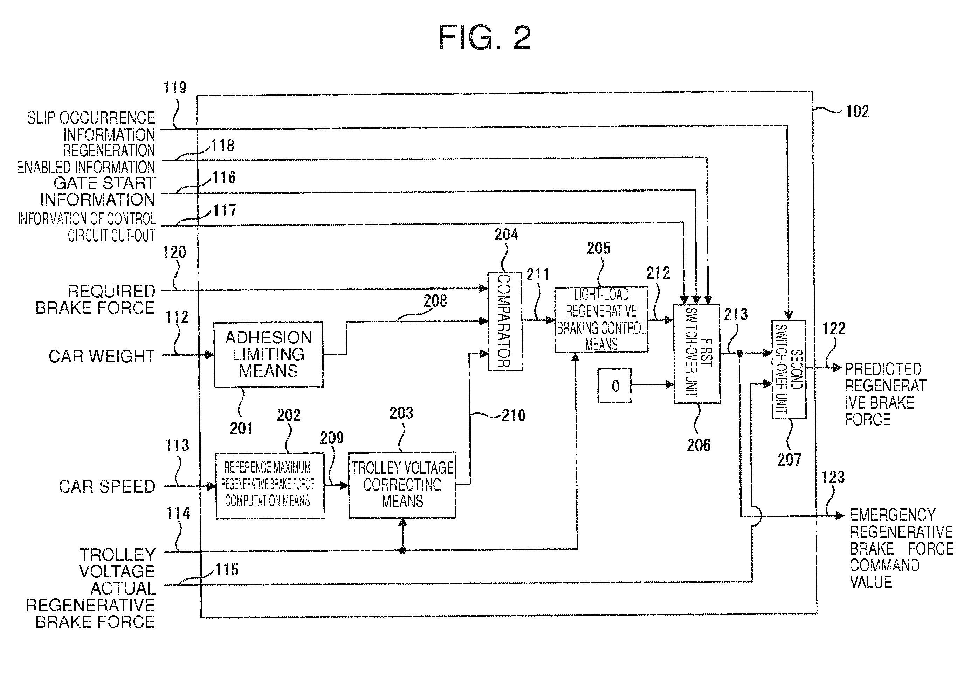

Next, the regenerative brake force estimation means (102) will be described with reference to FIG. 2.

The regenerative brake force estimation means (102) includes adhesion limiting means (201), reference maximum regenerative brake force computation means (202), trolley voltage correcting means (203), a comparator (204), light-load regenerative braking control means (205), a first siNitch-over unit (206), and a second switch-over unit (207). The predicted regenerative brake force (122) is output to the air brake force computation means (103) via the second switch-over unit (207) and the emergency regenerative brake force command value (123) is output to the regenerative brake force computation means (106) via the first switch-over unit (206).

Next, a flow of predicted regenerative brake force calculation will be described.

The adhesion limiting means (201) calculates an adhesion limit value (208) from the car weight (112) and an adhesion coefficient using Eq. (1) such that the command value for the regenerative brake will not exceed an adhesion limit of wheels and rails.

$$F = \mu m g \qquad Eq. \ (1)$$

In Eq. (1), F is the adhesion limit value (208), $\mu$ is the adhesion coefficient, m is the car weight (112), and g is gravitational acceleration. A stipulated value is used as the adhesion coefficient in the present embodiment, but an estimated value may be used by estimating the adhesion coefficient in real time.

The reference maximum regenerative brake force computation means (202) computes and outputs a reference maximum regenerative brake force (209) using a performance curve which stipulates a maximum brake force the motor can output at each car speed.

The trolley voltage correcting means (203) makes corrections to the reference maximum regenerative brake force (209) output by the reference maximum regenerative brake force computation means (202), according to the level of the current trolley voltage.

Here, the motor control device (107) shown in FIG. 1 has the property of developing a large output-ready regenerative brake force when direct current voltage applied to the motor control device (107) is high, and a small output-ready regenerative brake force when the direct current voltage applied to the motor control device (107) is low.

However, the reference maximum regenerative brake force (209), which is computed assuming that the direct current voltage applied to the motor control device (107) is at a stipulated value, does not match the regenerative brake force which can actually be output.

Thus, the trolley voltage correcting means (203) outputs a corrected maximum regenerative brake force (210) by making corrections so as to amplify the reference maximum regenerative brake force (209) when the current trolley voltage (114) is higher than the stipulated value or reducing the reference maximum regenerative brake force (209) when the current trolley voltage (114) is lower. An example in which the trolley is a direct current trolley is shown in the present embodiment, but when the trolley is an alternating current trolley, a power conversion device adapted to convert the alternating current of the trolley into direct current is mounted on the car and a direct current voltage output by the power conversion device is input to the motor control device (107). In that case, the direct current voltage input to the motor control device (107) is used instead of the trolley voltage (114) according to the present embodiment.

Although corrections are made using the trolley voltage (114) in the present embodiment, another variable may be used for the corrections as long as the variable allows the voltage applied to the motor control device (107) to be seen. For example, a filter capacitor voltage may be used.

The comparator (204) accepts as inputs the required brake force (120) from the required brake force computation means (101), the adhesion limit value (208) from the adhesion limiting means (201), and the corrected maximum regenerative brake force (210) from the trolley voltage correcting means (203), and outputs the smallest value thereof as a first predicted regenerative brake force (211).

Normally, the first predicted regenerative brake force (211) coincides with the final predicted regenerative brake force (122).

The light-load regenerative braking control means (205), first switch-over unit (206), and second switch-over unit (207) are activated only when respective starting conditions are satisfied.

If a regenerative brake is used even though a regenerative load (such as air-conditioning of the car itself and another car in the process of powering) is insufficient, the trolley voltage is raised excessively The raised trolley voltage could damage electrical transformation facilities and the like. Also, overvoltage protection comes into play in the car itself as well and the motor control device (107) cuts off the regenerative brake. If the regenerative brake is cut off, the riding comfort will become uncomfortable or regenerative brake force cannot be generated promptly in response to an increase in the regenerative load.

To prevent such unnecessary raised trolley voltage and maintain the regenerative brake force, when the trolley voltage rises to or above a stipulated value, the light-load regenerative braking control means (205) reduces the first predicted regenerative brake force (211) and outputs it as a second predicted regenerative brake force (212) to the first switch-over unit (206).

Based on the gate start information (116), information of control circuit cut-out (117), and regeneration enabled information (118) sent from the motor control device (107), the first switch-over unit (206) determines whether regenerative brake force is ready to be output.

If the gate start information (116) sent from the motor control device (107) has been set to "1," this means that regenerative brake force is ready to be output.

The circuit is cut off when the motor control device (107) cut off the circuit by itself, when the circuit is cut off at the direction of a crew member, when the circuit is cut off at the direction of a device which supervises and centrally controls conditions of the railroad train, or in other similar cases. If any such information of control circuit cut-out (117) sent from the motor control device (107) has been set to "1," this means that regenerative brake force cannot be output.

If regeneration enabled information (118) sent from the motor control device (107) has been set to "0," this means that the regenerative brake is cut off and that regenerative brake force cannot be output.

In this way, although the light-load regenerative braking control means (205) performs regenerative braking control under light load conditions so that the regenerative brake will not be cut off, if condition of another car changes abruptly from powering to braking, the trolley voltage will change abruptly, causing the motor control device (107) to cut off the regenerative brake (to cancel regeneration).

That is, when the gate start information is set to "1" and information of control circuit cut-out is set to "0" and regeneration enabled is set to "1," the first switch-over unit (206) produces output by substituting the second predicted regenerative brake force (212) into a third predicted regenerative brake force (213).

Otherwise, the first switch-over unit (206) produces output by substituting 0 into the third predicted regenerative brake force (213).

The third predicted regenerative brake force (213) is output as the emergency regenerative brake force command value (123) to the regenerative brake force computation means (106).

If "1" is sent as the slip occurrence information (119) from the motor control device (107), the second switch-over unit (207) determines that a slip has occurred. When a slip occurs, the second switch-over unit (207) produces output by substituting an actual regenerative brake force (115) into the predicted regenerative brake force (122), where the actual regenerative brake force (115) is a feedback value of the regenerative brake force output by the motor control device at present.

When a slip occurs, the motor control device (107) reduces the regenerative brake force on its own, making the actual regenerative brake force (115) smaller than the regenerative brake force command value (127).

Consequently, the sum total of the actual regenerative brake force (115) and actual air brake force (126) becomes smaller than the required brake force (120). To avoid such a lack of brake force, a command to the air brake control device (104) is created using the actual regenerative brake force (115) during slip by temporarily stopping to estimate output-ready regenerative brake force.

Incidentally, if the control performed by the motor control device (107) during slip is incorporated into the regenerative brake force estimation means (102), the second switch-over unit (207) can be omitted.

Otherwise, output is produced by substituting the third predicted regenerative brake force (213) into the predicted regenerative brake force (122).

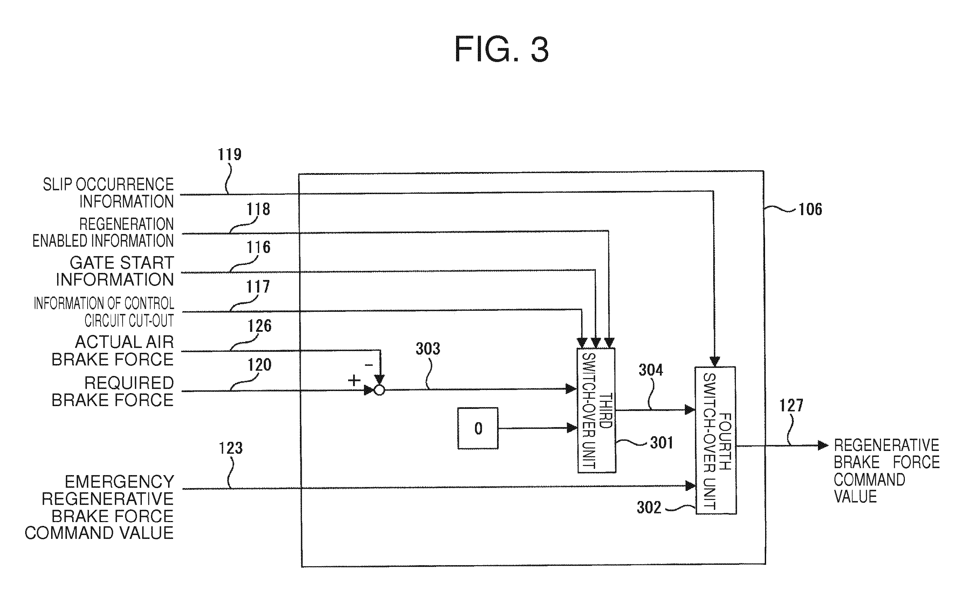

Next, details of the regenerative brake force computation means (106) will be described with reference to FIG. 3.

First, the regenerative brake force computation means (106) calculates a first regenerative brake force command value (303) by subtracting the actual air brake force (126) from the required brake force (120) using a subtractor.

When the gate start information (116) is set to "1" and the information of control circuit cut-out (117) is set to "0" and regeneration enabled is set to "1," a third switch-over unit (301) produces output by substituting the first regenerative brake force command value (303) into a second regenerative brake force command value (304).

Otherwise, the third switch-over unit (301) produces output by substituting 0 into the second regenerative brake force command value (304).

That is, when the motor control device (107) is inactive or cut off if regeneration is canceled, no regenerative brake force can be output, and thus a command value of 0 is output in advance.

If occurrence of slip is detected, the motor control device (107) sends "1" as the slip occurrence information and lowers the regenerative brake force command value (127) on its own.

Therefore, when the slip occurrence information is set to "1," a fourth switch-over unit (302) produces output by substituting the emergency regenerative brake force command value (123) into the regenerative brake force command value (127).

When the slip occurrence information is set to "0," the fourth switch-over unit (302) produces output by substituting the second regenerative brake force command value (304) into the regenerative brake force command value (127).

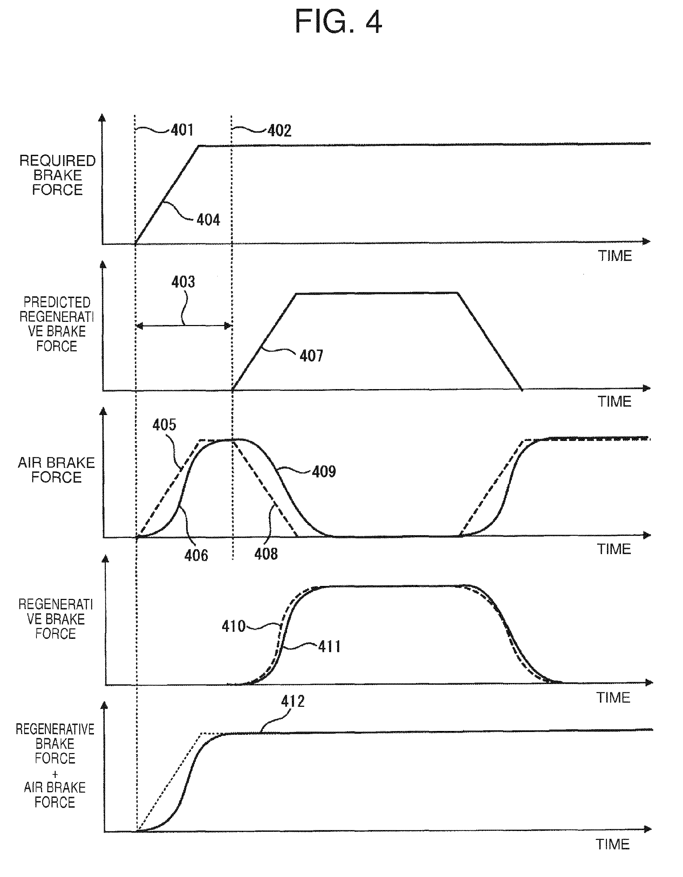

Next, behavior of the regenerative brake and air brake through use of the present invention will be described with reference to a time chart in FIG. 4.

When the driver operates the brake lever, the required brake force is output (401). In so doing, jerk control which involves increasing the brake force at a predetermined rate is performed to prevent the riding comfort from becoming uncomfortable as a result of abrupt changes in the brake force.

The regenerative brake needs preparation to pass a current, and it takes a predetermined time (403) to get ready to be output after a brake force command is input. Thus, the regenerative brake force estimation means (102) outputs 0 as the predicted regenerative brake force (122) during this time.

The value obtained by subtracting the predicted regenerative brake force (122) from the required brake force (120) is a command value for the air brake. When the predicted regenerative brake force is 0, the command value of the air brake force becomes equal (405) to the required brake force (120).

The air brake control device (104) operates the air brake in response to the command value (405) for the air brake, but generally the air brake operates slowly and the actual air brake force behaves with a delay from the command value (405) for the air brake.

When the motor control device gets ready to pass a current (402) and the regenerative brake becomes ready to produce output, the regenerative brake force estimation means (102) outputs a predicted regenerative brake force (407).

The command value for the air brake changes (408) with changes in the predicted regenerative brake force (122), and the actual air brake force behaves as indicated by (409).

The actual air brake force is calculated from air pressure in the cylinder (108) and the difference between the actual air brake force and required brake force is established as a regenerative brake force command value (410). The motor has high control responsiveness, and thus the actual regenerative brake force behaves almost according to the command value (411).

Thus, according to the present invention, an output-ready regenerative brake force is calculated as a predicted regenerative brake force based on predetermined information, and the value obtained by subtracting the predicted regenerative brake force from a required brake force is established as a command value for the air brake. Furthermore, a deviation between the required brake force and actual air brake force is established as a command value of the regenerative brake force. Consequently, the deviation between the required brake force and actual air brake force can be compensated for by the regenerative brake force with high responsiveness, and the actual brake force (actual air brake force + actual regenerative brake force) can be made to match the required brake force.

[Second embodiment]

Whereas a control method for a single car has been described in the first embodiment, a case in which the above-described control method is applied to an entire train will be described in the second embodiment.

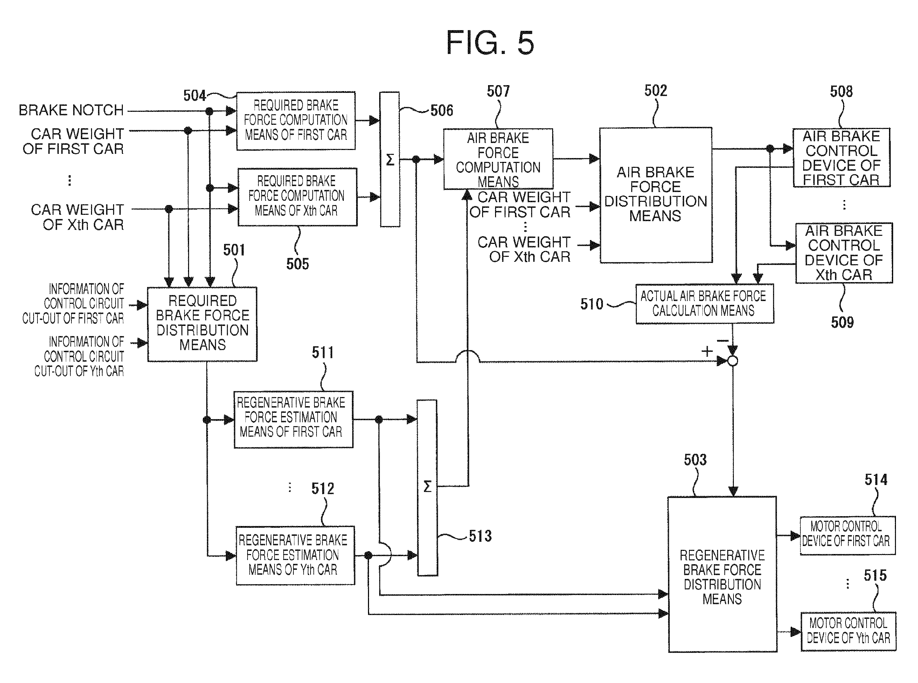

The second embodiment will be described with reference to FIG. 5.

A flow of control is similar to that for a single car (first embodiment).

However, as many computations of required brake force are needed as there are air brake control devices in the train. The required brake force computation means may be installed for each air brake control device in the train or the required brake force computation means may be integrated into a device (e.g., overall train control device) which supervises and centrally controls information in the train. Similarly, as many regenerative brake force estimation means are needed as there are motor control devices in the train, and the regenerative brake force estimation means may be installed for each motor control device in the train or integrated into the overall train control device.

Components which need to be newly added include required brake force distribution means (501), air brake force distribution means (502), and regenerative brake force distribution means (503).

The required brake force distribution means (501) distributes required brake force to be output in the train as a whole among motor cars (cars equipped with a motor). The required brake force is distributed among the motor cars according to their respective car weights. A small brake force is distributed to a light-weight car and a large brake force is distributed to a heavy-weight car.

Also, a motor car which cannot share a brake force is determined based on the information of control circuit cut-out and the required brake force of this motor car is shared by another motor car.

The air brake force distribution means (502) distributes air brake force to be output in the train as a whole among the cars. In so doing, the air brake force is distributed so as to be shouldered first by trailers (cars without a motor) and then distributed to motor cars only if the brake force cannot be shouldered by the trailers alone.

Among the trailers and motor cars, the air brake force is distributed according to the car weights of the respective cars.

The regenerative brake force distribution means (503) distributes regenerative brake force to be output in the train as a whole among the motor cars. The regenerative brake force is distributed among the motor cars according to the ratio among the predicted regenerative brake forces of the respective cars.

Thus, according to the present invention, in a train composed of multiple connected cars, the actual brake force (actual air brake force + actual regenerative brake force) of the entire train can be made to match the required brake force.

Although a brake control device of a car which uses an air brake and regenerative brake has been described in the above embodiments, the present invention is not limited to these brakes, and is applicable to any other brake control device which uses two or more types of brake differing in response speed. Other brakes include an engine brake.

Also, other than a method of supplying regenerative electricity to other electric rolling stock via a trolley as with the above embodiments, the regenerative brake according to the present invention can be replaced with a method of storing regenerative electricity in an electricity storage device mounted on a car or a method of consuming regenerative electricity by a braking resistor. Also, the air brake according to the present invention can be replaced with another mechanical brake which converts kinetic energy into thermal energy by friction other than a method of operating a cylinder using pressure of compressed air and using frictional force generated by pressing a brake shoe against a brake disc or wheel tread as with the above embodiments.

In short, in a car equipped with a plurality of braking means differing in responsiveness, a brake force producible by high-responsivity braking means is estimated and a brake command value for low-responsivity braking means is determined based on a required brake force for stoppage or deceleration to a predetermined speed and on an estimated value of the brake force producible by the high-responsivity braking means. Then, based on the required brake force and on an actual brake force generated actually by the low-responsivity braking means in response to the brake command value, a brake command value for high-responsivity braking means can be determined so as to make up for the difference between the required brake force and actual brake force, allowing the sum total of the brake forces to match the required brake force even if there are variations in actual brake force characteristics between different braking means.

Reference Signs List

101 Required brake force computation means

102 Regenerative brake force estimation means
103 Air brake force computation means
104 Air brake control device
105 Actual air brake force calculation means
106 Regenerative brake force computation means
107 Motor control device
110 Motor
111 Brake notch
112 Car weight
113 Car speed
114 Trolley voltage
115 Actual regenerative brake force
116 Gate start information
117 Information of control circuit cut-out
118 Regeneration enabled information
119 Slip occurrence information
120 Required brake force
122 Predicted regenerative brake force
124 Air brake force command value
126 Actual air brake force
127 Regenerative brake force command value

**Claims**

1. A brake control device of a car which includes first braking means for producing a brake force according to a first brake force command value, second braking means for producing a brake force according to a second brake force command value, the second braking means having lower responsiveness than the first braking means, and required brake force determination means for determining a required brake force based on a braking command inputted from outside, the brake control device comprising:

   brake force estimation means for estimating the brake force producible by the first braking means;
   second brake force determination means for determining the second brake force command value based on the required brake force and on an estimated brake force value estimated by the brake force estimation means;
   actual brake force calculation means for calculating an actual brake force produced by the second braking means; and
   first brake force determination means for determining the first brake force command value based on the required brake force and on the actual brake force produced by the second braking means and calculated by the actual brake force calculation means.

2. The brake control device of a car according to claim 1, wherein:

the second brake force determination means determines the second brake force command value by subtracting the estimated brake force value estimated by the brake force estimation means from the required brake force; and the first brake force determination means determines the first brake force command value by subtracting the actual brake force produced by the second braking means and calculated by the actual brake force calculation means from the required brake force.

3. The brake control device of a car according to claim 1, wherein the required brake force computation means determines the required brake force based on a command from a cab or an automatic operation device and on car weight.

4. The brake control device of a car according to claim 1, wherein:

   the first braking means is regenerative braking means which causes a motor to act as a generator; and
   the brake force estimation means determines the brake force producible by the first braking means, based on a voltage applied to a motor control device.

5. The brake control device of a car according to claim 1, wherein the brake force estimation means determines the brake force producible by the first braking means, based on adhesion between wheels and rails.

6. The brake control device of a car according to any one of claims 1 to 5, wherein the first braking means is regenerative braking means which causes a motor to act as a generator; and the second braking means is mechanical braking means which converts kinetic energy into thermal energy by friction.

7. A brake control device of a train set which includes a plurality of first cars and a plurality of second cars, wherein:

   each of the first cars includes first braking means for producing a brake force according to a first brake force command value, second braking means for producing a brake force according to a second brake force command value, the second braking means having lower responsiveness than the first braking means, and required brake force computation means for determining a required brake force command value for a car itself;
each of the second cars includes second braking means for producing a brake force according to a second brake force command value, the second braking means having lower responsiveness than the first braking means, and required brake force computation means for determining a required brake force command value for the car itself;
the brake control device comprises:

   required brake force distribution means for distributing a brake force required for an entire train to the first cars,
   brake force estimation means for estimating the brake force producible by the first braking means,
   second brake force distribution means for distributing a second brake command value required for the entire train to the first cars and the second cars,
   actual brake force calculation means for calculating an actual brake force produced by the second braking means, and
   first brake force distribution means for distributing a first brake command value required for the entire train to the first cars; and

the second brake force command value is determined based on the required brake force command value as well as on an estimated brake force value determined by the brake force estimation means, and the first brake force command value is determined based on the required brake force command value as well as on an actual brake force generated by the second braking means.

8. The brake control device of a train set according to claim 7, wherein the required brake force distribution means distributes the required brake force according to respective car weights of the plurality of first cars.

9. The brake control device of a train set according to claim 7, wherein the required brake force distribution means distributes the required brake force according to information of control circuit cut-out of each of the plurality of first cars.

# FIG. 1

EP 2 623 361 A1

# FIG. 2

SLIP OCCURRENCE INFORMATION — 119

REGENERATION ENABLED INFORMATION — 118

GATE START INFORMATION — 116

INFORMATION OF CONTROL CIRCUIT CUT-OUT — 117

REQUIRED BRAKE FORCE — 120

CAR WEIGHT — 112

CAR SPEED — 113

TROLLEY VOLTAGE — 114

ACTUAL REGENERATIVE BRAKE FORCE — 115

102

204

205

212

211

208

ADHESION LIMITING MEANS — 201

COMPARATOR — 204

LIGHT-LOAD REGENERATIVE BRAKING CONTROL MEANS — 205

FIRST SWITCH-OVER UNIT — 206

213

SECOND SWITCH-OVER UNIT — 207

0

REFERENCE MAXIMUM REGENERATIVE BRAKE FORCE COMPUTATION MEANS — 202

TROLLEY VOLTAGE CORRECTING MEANS — 203

209

210

122 PREDICTED REGENERATIVE BRAKE FORCE

123 EMERGENCY REGENERATIVE BRAKE FORCE COMMAND VALUE

115

EP 2 623 361 A1

## FIG. 3

106

119

118 SLIP OCCURRENCE INFORMATION

116 REGENERATION ENABLED INFORMATION

117 GATE START INFORMATION

126 INFORMATION OF CONTROL CIRCUIT CUT-OUT

120 ACTUAL AIR BRAKE FORCE

REQUIRED BRAKE FORCE

123 EMERGENCY REGENERATIVE BRAKE FORCE COMMAND VALUE

303

304

301

302

THIRD SWITCH-OVER UNIT

0

FOURTH SWITCH-OVER UNIT

127 REGENERATIVE BRAKE FORCE COMMAND VALUE

11

# FIG. 4

# FIG. 5

EP 2 623 361 A1

**EP 2 623 361 A1**

<div style="text-align:center">

**INTERNATIONAL SEARCH REPORT**

</div>

| | International application No. |
|---|---|
| | PCT/JP2011/068870 |

**A. CLASSIFICATION OF SUBJECT MATTER**
*B60L7/24*(2006.01)i, *B60T8/17*(2006.01)i

According to International Patent Classification (IPC) or to both national classification and IPC

**B. FIELDS SEARCHED**

Minimum documentation searched (classification system followed by classification symbols)
B60L7/24, B60T8/17

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2006-312384 A  (Honda Motor Co., Ltd.),<br>16 November 2006 (16.11.2006),<br>paragraphs [0033] to [0039]; fig. 3, 4<br>(Family: none) | 1-4,6<br>5,7-9 |
| Y<br>A | JP 2003-87904 A  (Mitsubishi Automotive<br>Engineering Co., Ltd.),<br>20 March 2003 (20.03.2003),<br>paragraphs [0023] to [0026]<br>(Family: none) | 1-4,6<br>5,7-9 |
| Y | JP 2001-57702 A  (Mitsubishi Electric Corp.),<br>27 February 2001 (27.02.2001),<br>paragraph [0010]<br>(Family: none) | 3 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 November, 2011 (10.11.11) | Date of mailing of the international search report<br>22 November, 2011 (22.11.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
| --- | --- |
| | PCT/JP2011/068870 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2006-205912 A  (Toyota Motor Corp.), 10 August 2006 (10.08.2006), paragraphs [0035] to [0043]; fig. 2 (Family: none) | 1-9 |

Form PCT/ISA/210 (continuation of second sheet) (July 2009)

**EP 2 623 361 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7099883 A